(19) Europäisches Patentamt

European Patent Office

Office européen des brevets

(11) **EP 4 564 444 A1**

(12) **EUROPEAN PATENT APPLICATION**

(43) Date of publication:
04.06.2025 Bulletin 2025/23

(21) Application number: 24211722.4

(22) Date of filing: 08.11.2024

(51) International Patent Classification (IPC):
$H01M\ 4/04^{(2006.01)}$ $H01M\ 4/02^{(2006.01)}$
$H01M\ 10/04^{(2006.01)}$

(52) Cooperative Patent Classification (CPC):
H01M 4/0435; H01M 4/0404; H01M 10/0418;
H01M 2004/029

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.11.2023 US 202363601156 P
30.10.2024 US 202418931394

(71) Applicant: **Lasagna.one Inc.**
**San Jose, CA 95134 (US)**

(72) Inventor: **Katoh, Yuki**
**San Jose, CA 95134 (US)**

(74) Representative: **London IP Ltd**
**100 High street**
**Milford on Sea**
**Lymington, Hampshire SO41 0QE (GB)**

(54) **METHOD FOR MANUFACTURING A BIPOLAR BATTERY**

(57) A method for forming a bipolar battery may apply a cathode layer to a current collector, comprising: providing a cathode mixture; and feeding the cathode mixture through a plurality of cathode calendar rolls. The method may apply an anode layer to the current collector, comprising: providing an anode mixture; and feeding the anode mixture through a plurality of anode calendar rolls. The cathode mixture and the anode mixture are fed into the plurality of cathode calendar rolls and the plurality of anode calendar rolls asymmetrically.

FIG. 4

EP 4 564 444 A1

**Description**

**RELATED APPLCIATIONS**

This patent application is related to U.S. Provisional Application No. 63/601,156 filed November 20, 2023, entitled "METHOD FOR MANUFACTURING A BIPOLAR BATTERY", which is incorporated herein by reference in its entirety. The present patent application claims the benefit under 35 U.S.C §119(e) of the aforementioned provisional application.

**TECHNICAL FIELD**

This disclosure generally relates to batteries, more particularly, to a method for manufacturing a bipolar battery.

**BACKGROUND OF THE INVENTION**

Electric vehicles (EVs) have become increasingly prevalent in the market as an alternative to traditional internal combustion vehicles, largely due to their environmentally friendly nature and advanced technological features. The operation of electric vehicles heavily relies on their battery systems, which provide the necessary electrical energy to power the motors.

Conventionally, in order to generate sufficient voltage to operate high torque motors in vehicles, a large number of batteries are connected in series. However, this design has several inherent drawbacks. One drawback, for example, is that the stacking of batteries in series necessitates a significant number of joint parts. Joint parts not only contribute to a loss of energy density and power density due to volumetric loss, but they also introduce additional resistance, leading to a decrease in power density. Moreover, joint parts tend to focus current around the jointed areas, resulting in inhomogeneous temperature and current distribution across the batteries. This can ultimately contribute to the premature degradation of the battery system.

To address these challenges, bipolar batteries have been developed. In these bipolar batteries, a positive electrode and a negative electrode are arranged on both sides of a collector, significantly reducing the need for joint parts. However, current bipolar battery designs often result in manufacturing challenges. Current methodologies may lead to issues such as wrinkling or breakage of layers due to the asymmetric nature of materials on the current collector. Present methodologies do not take into account the asymmetry of bipolar stacking. For example, if the thickness of anode and cathode are different, the velocity of roll surface presently used may cause wrinkling or breakage of the layers.

Therefore, it would be desirable to provide a system and method that overcomes the above. The system and method would provide a method of forming a bipolar battery that takes into account the asymmetric nature of bipolar battery stacking. The system and method would prevent wrinkling and breakage of layers due to the asymmetric nature of materials on the current collector.

**SUMMARY OF THE INVENTION**

This summary is provided to introduce a selection of concepts in a simplified form that are further described below in the DETAILED DESCRIPTION OF THE INVENTION. This summary is not intended to identify key features of the claimed subject matter, nor is it intended to be used as an aid in determining the scope of the claimed subject matter.

According to an embodiment of the disclosure, a method for forming a bipolar battery is provided. The method for forming a bipolar battery may apply a cathode layer to a current collector, comprising: providing a cathode mixture; and feeding the cathode mixture through a plurality of cathode calendar rolls. The method may apply an anode layer to the current collector, comprising: providing an anode mixture; and feeding the anode mixture through a plurality of anode calendar rolls. The method may feed the cathode mixture and the anode mixture into the plurality of cathode calendar rolls and the plurality of anode calendar rolls asymmetrically.

According to an embodiment of the disclosure, a method for forming a bipolar battery is provided. The method for forming a bipolar battery, may apply a cathode layer to a current collector, comprising: providing a cathode mixture; and feeding the cathode mixture through a plurality of cathode calendar rolls, wherein a cathode calendar roll where the cathode mixture is initially fed being 0 and a cathode calendar roll in contact with the current collector being 2N+1, where N is a positive integer greater than or equal to 0, wherein a radius, $r_c$, of each of the plurality of cathode calendar rolls is equal. The method may apply an anode layer to the current collector, comprising: providing an anode mixture; and feeding the anode mixture through an odd number of anode calendar rolls, wherein an anode calendar roll where the anode mixture is initially fed being 0 and an anode calendar roll in contact with the current collector being 2N'+1, where N' is a positive integer greater than or equal to 0, a radius, $r_a$, of each of the plurality of anode calendar rolls is equal. An angular velocity of each of the plurality of cathode calendar rolls and an angular velocity speed of each of the plurality of anode calendar rolls are proportional to a thickness of the cathode layer and a thickness of the anode layer being applied to the current collector.

According to an embodiment of the disclosure, a method for forming a bipolar battery is provided. The method for forming a bipolar battery may apply a cathode layer to a current collector, comprising: providing a cathode mixture; and feeding the cathode mixture through a plurality of cathode calendar rolls, wherein a cathode calendar roll where the cathode mixture is initially fed being 0 and a cathode calendar roll in contact with the current collector being $2N+1$, where N is a positive integer greater than or equal to 0, wherein a radius, $r_c$, of each of the plurality of cathode calendar rolls is equal. The method may apply an anode layer to the current collector, comprising: providing an anode mixture; and feeding the anode mixture through an odd number of anode calendar rolls, wherein an anode calendar roll where the anode mixture is initially fed being 0 and an anode calendar roll in contact with the current collector being $2N'+1$, where N' is a positive integer greater than or equal to 0, a radius, $r_a$, of each of the plurality of anode calendar rolls is equal. An angular velocity of each of the plurality of cathode calendar rolls and an angular velocity of each of the plurality of anode calendar rolls may satisfy the equations:

○

$$(0.8*k)*w_{c,2N+1} < w_{a,2N'+1} < (1.2*k)*w_{c,2N+1}$$

○

$$k = (r_c + t_{c,2N}) / (r_a + t_{a,2N'})$$

wherein $w_{c,N}$ is an angular velocity of a designated cathode calendar roll, N being a positive integer greater than or equal to 0, $w_{a,N'}$ is an angular velocity of a designated anode calendar roll, N' being a positive integer greater than or equal to 0, $r_c$ is a radius of an individual cathode calendar roll, $r_a$ is a radius of an individual anode calendar roll, $t_{c,2N}$ is a gap between adjacent cathode calendar rolls, and $t_{a,2N'}$ is a gap between adjacent anode calendar rolls. The method may apply a first separator layer to the cathode layer and a second separator layer to the anode layer comprising: providing a cathode separator mixture; providing an anode separator mixture; feeding the cathode separator mixture through a first plurality of separator calendar rolls; and feeding the anode separator mixture through a second plurality of separator calendar rolls. The angular velocity of each of the first plurality of separator rolls and the angular velocity of each of the second plurality of separator calendar rolls may satisfy the equations:

○

$$(0.8* K_s)*w_{sep,2M+1} < w_{sep,2M'+1} < (1.2* K_s)*w_{sep,2M+1}$$

○ $K_s = (r_{sep} + t_{sep,2N}) / (r_{sep'} + t_{sep,2M'})$ : where $r_{sep}$ is the radius of a separator calendar roll of the first plurality of separator rolls and $r_{sep'}$ is the radius of a separator calender roll of the second plurality of separator rolls;

wherein $w_{sep,N}$ is an angular velocity of a designated separator calendar roll of the first plurality of separator rolls, N being a positive integer greater than or equal to 0, $w_{sep,N'}$ is an angular velocity of a designated separator calendar roll of the second plurality of calendar rolls, N' being a positive integer greater than or equal to 0, $r_{sep}$ is a radius of an individual separator calendar roll of one of the first plurality of separator rolls or the second plurality of separator rolls, $t_{sep,2N}$ is a gap between adjacent separator calendar rolls of the first plurality of separator rolls, and $t_{sep,2N'}$ is a gap between adjacent separator calendar rolls of the second plurality of calendar rolls.

## BRIEF DESCRIPTION OF THE DRAWINGS

The present application is further detailed with respect to the following drawings. These figures are not intended to limit the scope of the present application but rather illustrate certain attributes thereof. The same reference numbers will be used throughout the drawings to refer to the same or like parts.

FIG. 1 shows a flow diagram of an exemplary process for forming a cathode mixture in accordance with an embodiment of the disclosure;
FIG. 2 shows a flow diagram of an exemplary process for forming an anode mixture in accordance with an embodiment of the disclosure;
FIG. 3 shows a flow diagram of an exemplary process for forming a separator mixture in accordance with an embodiment of the disclosure;

FIG. 4 shows a block diagram of an exemplary system for a bipolar stacked battery fabrication process in accordance with an embodiment of the disclosure; and

FIG. 5 shows a block diagram of an exemplary system for a bipolar stacked battery fabrication process in accordance with an embodiment of the disclosure.

## DETAILED DESCRIPTION OF THE INVENTION

The description set forth below is intended as a description of presently preferred embodiments of the disclosure and is not intended to represent the only forms in which the present disclosure can be constructed and/or utilized. The description sets forth the functions and the sequence of steps for constructing and operating the disclosure. It is to be understood, however, that the same or equivalent functions and sequences can be accomplished by different embodiments that are also intended to be encompassed within the spirit and scope of this disclosure.

This patent application proposes a system and method for manufacturing bipolar batteries suitable for electric vehicles. The system and method takes into account the asymmetric nature of bipolar battery stacking and prevents wrinkling and breakage of layers due to the asymmetric nature of materials laminated on the current collector.

Presently, a stacked bipolar battery may be comprised of a current collector, a cathode layer, a separator, an anode layer, another current collector, a second cathode layer, a second separator, a second anode layer and so on in this repeating order. Theses layers may be laminated together to form the stacked bipolar battery.

The cathode layer and the anode layer may be fabricated by series of calender rolls. The layers may be laminated with the current collector. In general, the calender rolls may satisfy the below conditions

○

$$w_{c,0} < w_{c,1} < w_{c,2} < w_{c,3} < \ldots < w_{c,2N+1}$$

(N: 0 or positive integer)

○

$$w_{a,0} < w_{a,1} < w_{a,2} < w_{a,3} < \ldots < w_{a,2N'+1}$$

(N': 0 or positive integer)

○ $k = (r_c + t_{c,2N}) / (r_a + t_{a,2N'})$ : where $r_c$, $r_a$ is the radius of calender roll of cathode side and anode side, respectively.

○

$$(0.8 * k) * (w_{c,2N+1}) < w_{a,2N'+1} < (1.2 * k) * (w_{c,2N+1})$$

There may be another set of calender rolls that may be used to fabricate the separator layer on the top of the cathode and anode. Those calender rolls may satisfy the below conditions:

○

$$w_{sep,0} < w_{sep,1} < w_{sep,2} < w_{sep,3} < \ldots < w_{sep,2M+1}$$

(M: 0 or positive integer)

○

$$w_{sep,0} < w_{sep,1} < w_{sep,2} < w_{sep,3} < \ldots < w_{sep,2M'+1}$$

(M': 0 or positive integer)

○ $K_s = (r_{sep} + t_{sep,2N}) / (r_{sep'} + t_{sep,2M'})$ : where $r_{sep}$ and $r_{sep'}$ are the radius of a calender roll on cathode side and anode side, respectively.

○

$$(0.8 * K_s) * (w_{sep,2M+1}) < w_{sep,2M'+1} < (1.2 * K_s) * (w_{sep,2M+1})$$

Current methodologies say $r_c = r_a$, $t_{c,2N} = t_{a,\,2N'}$, and $w_c = w_a$. This may work for mono-polar stacking that has the same component (namely, stack of "cathode/current collector/cathode" or that of "anode/current collector/anode). But for bipolar stacking (cathode/current collector/anode), this setting generally does not work well because the stack is not symmetric.

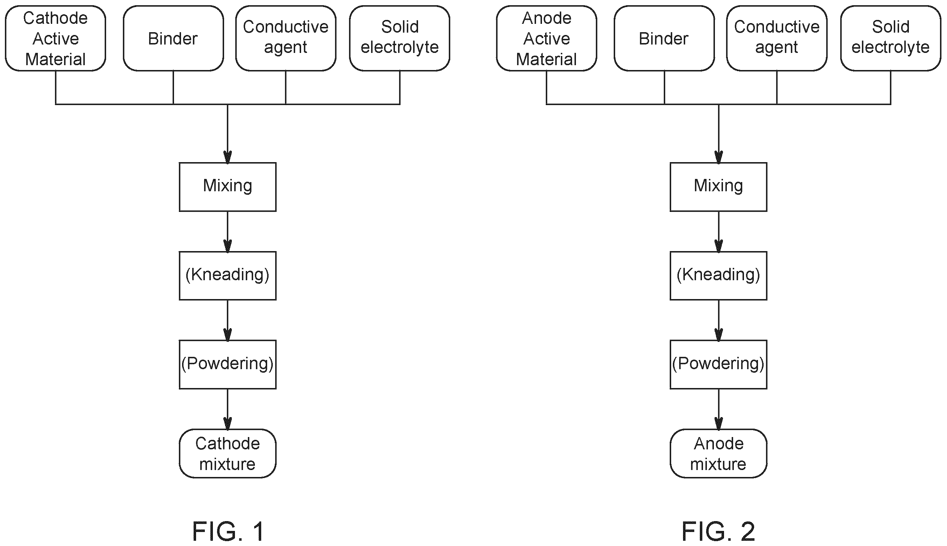

Referring to FIG. 1, a process for forming a cathode mixture may be shown. In the process shown in FIG. 1, a Cathode Active Materials (CAM), a binder, a conductive agent and a solid electrolyte may be provided. Examples of the CAM may include, but are not limited to: layered lithium containing oxide materials, such as $LiCoO_2$, $LiMnO_2$, $LiNiO_2$, $LiNi_xMn_yCo_{1-x-y}O_2$, $LiNi_xCo_yAl_{1-x-y}O_2$, lithium containing phosphate with olivine structure, such as $LiFePO_4$, $LiFe_xMn_{1-x}PO_4$, $LiMnPO_4$, $LiFe_xCo_{1-x}PO_4$, $LiCoPO_4$, lithium containing oxide materials with spinel structure, such as $LiNi_{0.5}Mn_{1.5}O_4$, $LiMn_2O_4$, lithium excess layered structured oxide, such as $Li_2MnO_3$, $Li_2RuO_3$, $Li_2Ru_xTi_{1-x}O_3$, $Li_2Ru_xSn_{1-x}O_3$, $Li_2Mn_xTi_{1-x}O_3$, $Li_2Mn_xSn_{1-x}O_3$, layered lithium containing sulfide materials, such as $TiS_2$, $MoS_2$, $NbS_2$, $TaS_2$, Sulfur, or lithium containing sulfide with Chevrel structure, such as $LiCu_xMoS_{1-z}$. The surface of the CAM may be coated by thin layer of materials, i.e., coating. Example of the coating may include, crystalline phase, such as $Li_2ZrO_3$, $LiNbOs$, $LiPOs$, $Li_3PO_4$, $LiTi_2(PO_4)_3$, $LiZr(PO_4)_3$, $ZrO_2$, $Al_2O_3$, EtOLi, MtOLi, LiOH, $Li_2CO_3$ and/or amorphous phase, such as metal alkoxide, metal phosphate.

The binder may be used to interconnect the CAM and conductive agent and adhere the electrode materials to the current collectors. Examples of the binder that may be contained in the cathode mixture include, but are not limited to, butadiene rubber (BR), butyl rubber (IIR), acrylate butadiene rubber (ABR), polyvinylidene difluoride (PVDF), Polytetrafluoroethylene (PTFE). Side chains of the binder may be modified by functional groups.

The conductive agent may be used to improve the electrical conductivity of the conductive additive, in order to ensure that the cathode being formed with the cathode mixture has a good charge and discharge performance. The conductive agent may have the effect of collecting micro electric current, as to reduce the contact resistance of electrode, the accelerated electrons move rate. The conductive agents may include but are not limited to: various types of carbon, which may include acetylene black (AB), Ketjen black (KB), VGCF, carbon nanotubes, carbon nanohorns, and fullerenes.

A solid electrolyte may be provided to improve the battery performance. Examples of electrolytes may include, but are not limited to: organic liquid, organic polymer, inorganic solids. Preferably, the electrolyte may be inorganic solids because of higher transference number of lithium compared to liquid and higher ionic conductivity than organic polymer. Further, inorganic solids are usually rigid and do not show liquidity which may be preferred to compose bipolar structure without ionic shorting.

Some examples of the electrolyte may include, but are not limited to, the materials having a composition of Li-P-O-N, Li-Si-O, Li-B-Si-O, Li-B-O, Li-C-B-O, Li-Al-Si-O, Li-Ti-AlP-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-O-X' (X' is F, Cl, Br or combination of those), Li-B-H, Li-B-N-H, Li-B-H-O, Li-B-N-H-O, Li-M"-X" (M is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

The CAM, the binder, the conductive agent, and the solid electrolyte may then be mixed. Different tools may be used for the mixing process. For example, the process/tools listed below may be used during the mixing process:

 o High shear mixer
 o Tumbler mixer
 o Twin screw extruder

The above listing is given as examples and should not be seen in a limiting manner. For example, in the case of using PTFE as a binder, low temperature mixing can be considered. Especially mixing below 19°C might provide better uniformity of PTFE particles without too much fibrillation because the phase transition happens at 19°C. Above 19°C, the PTFE get ease to generate fibrils with small amount of share force. Below 19°C, less fibrillation happens and can be dispersed by mixer less than higher temperature.

After the mixing process, a kneading process may be done. The kneading process may be done with different tools. For example, listed below are kneading process/tools that may be used. Again, the list is given as an example and should not be seen in a limiting manner. The kneading process/tools may include:

 o Twin screw extruder
 o Rubber kneader
 o Mochi machine
 o Automatic mortar

The kneading process is optional and the use may depend on the materials being used. For example, In the case of using PTFE as a binder, high temperature mixing can be considered. Especially mixing above 19°C might provide better uniformity of PTFE fibrils because the phase transition happens at 19°C. Above 19°C, the PTFE may generate fibrils with small amount of share force. As a result of kneading, one can obtain flakes of cathode mixture.

A powdering step may also be used. In the case where the kneading process is used, one can add the powdering process to turn the flakes into powders. Examples of different powdering process/tools are below:

> o High speed grinder
> o Twin screw extruder

Again, the list is given as an example and should not be seen in a limiting manner.

Referring to FIG. 2, a process for forming an anode mixture may be shown. In the process shown in FIG. 2, an Anode Active Materials (AAM), a binder, a conductive agent and a solid electrolyte may be provided. Examples of the AAM include, but are not limited to, layered lithium containing sulfide materials, such as $TiS_2$, $MoS_2$, $NbS_2$, $TaS_2$, titanium containing oxides, such as, $Li_4Ti_5O_{12}$, $Ti_xNb_yO_z$, $Li_xTi_2(PO_4)_3$, tungsten containing oxides, such as $Nb_{16}W_5O_{55}$, $Nb_{18}W_{16}O_{93}$, vanadium containing oxide, such as $LiVO_2$, Artificial carbon (or hard carbon), Graphite, Li-metal alloy, such as $Li_xIn$, $Li_xSn$, $Li_xSi$, $Li_xGe$, $Li_xAl$, or metallic lithium.

The binder may be used to interconnect the AAM and conductive agent and adhere the electrode materials to the current collectors. The binders used may be the same as those used for the cathode process above. However, different binders may also be used. Thus, examples of the binder that may be contained in the anode mixture may include, but are not limited to, butadiene rubber (BR), butyl rubber (IIR), acrylate butadiene rubber (ABR), polyvinylidene difluoride (PVDF), Polytetrafluoroethylene (PTFE). Side chains of the binder may be modified by functional groups.

The conductive agent may be used to improve the electrical conductivity of the conductive additive, in order to ensure that the anode being formed with the anode mixture has a good charge and discharge performance. The conductive agent may have the effect of collecting micro electric current, as to reduce the contact resistance of electrode, the accelerated electrons move rate. The conductive agents may be the same as that used in the cathode mixture but can also be different from that of cathode mixture. Thus, conductive agents may include, but are not limited to: various types of carbon, which may include acetylene black (AB), Ketjen black (KB), VGCF, carbon nanotubes, carbon nanohorns, and fullerenes.

The solid electrolyte may be provided to improve the battery performance. The electrolyte used may be the same as those used in the cathode mixture, but can also be different from that of cathode mixture. Examples of the electrolytes used may include, but are not limited to: organic liquid, organic polymer, inorganic solids. Preferably, the electrolyte may be inorganic solids because of higher transference number of lithium compared to liquid and higher ionic conductivity than organic polymer. Further, inorganic solids are usually rigid and do not show liquidity which may be preferred to compose bipolar structure without ionic shorting.

Some examples of electrolyte may include, but are not limited to, materials having the composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-O-X' (X' is F, Cl, Br or combination of those), Li-B-H, Li-B-N-H, Li-B-H-O, Li-B-N-H-O, Li-M"-X" (M is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

The AAM, the binder, the conductive agent, and the solid electrolyte may then be mixed. Different tools may be used for the mixing process. The tools used in the mixing process may be the same as those used in the cathode mixture but can also be different from that of cathode mixture. For example, the process/tools listed below may be used during the mixing process:

> o High shear mixer
> o Tumbler mixer
> o Twin screw extruder

The above listing is given as examples and should not be seen in a limiting manner. For example, in the case of using PTFE as a binder, low temperature mixing can be considered. Especially mixing below 19°C might provide better uniformity of PTFE particles without too much fibrillation because the phase transition happens at 19°C. Above 19°C, the PTFE get ease to generate fibrils with small amount of share force. Below 19°C, less fibrillation happens and can be dispersed by mixer less than higher temperature.

After the mixing process, a kneading process may be done. The kneading process may be done with different tools. The tools used in the kneading process may be the same as those used in the cathode mixture, but can also be different from that of cathode mixture. For example, listed below are kneading process/tools that may be used. Again, the list is given as an example and should not be seen in a limiting manner. The kneading process/tools may include:

o Twin screw extruder
o Rubber kneader
o Mochi machine
o Automatic mortar

The kneading process is optional and may use may depend on the materials being used. For example, In the case of using PTFE as a binder, high temperature mixing can be considered. Especially mixing above 19°C might provide better uniformity of PTFE fibrils because the phase transition happens at 19°C. Above 19°C, the PTFE may generate fibrils with small amount of share force. As a result of kneading, one can obtain flakes of cathode mixture

A powdering step may also be used. In the case the kneading process is used, one can add the powdering process to turn the flakes into powders. The tools used in the powdering process may be the same as those used in the cathode mixture but can also be different from that of cathode mixture. Examples of different powdering process/tools are below:

o High speed grinder
o Twin screw extruder

Again, the list is given as an example and should not be seen in a limiting manner.

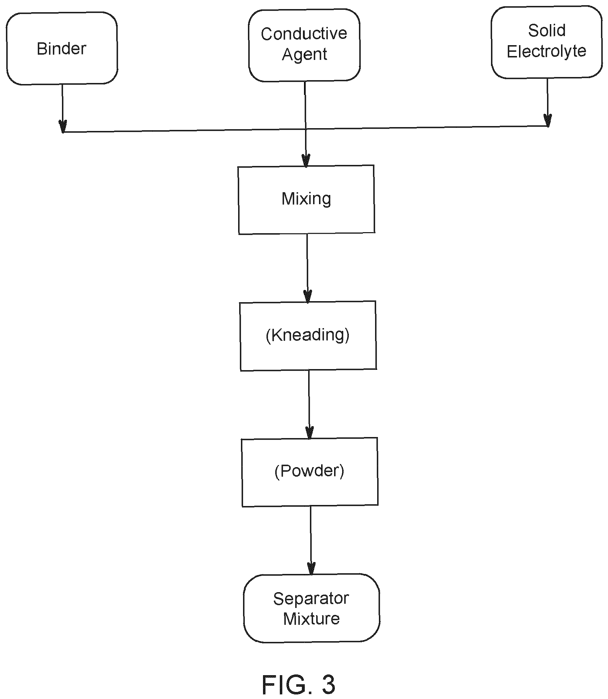

Referring to FIG. 3, a process for forming a separator mixture may be shown. In the process shown in FIG. 3, a binder, a conductive agent, and a solid electrolyte may be provided. The binder may be used to adhere the separator materials to the current collectors. The binders used may be the same as those used for the cathode process above. However, different binders may also be used. Thus, examples of the binder that may be contained in the separator mixture may include, but are not limited to, butadiene rubber (BR), butyl rubber (IIR), acrylate butadiene rubber (ABR), polyvinylidene difluoride (PVDF), Polytetrafluoroethylene (PTFE). Side chains of the binder may be modified by functional groups.

The conductive agents may be the same as that used in the cathode mixture but may also be different from that of cathode mixture. Thus, conductive agents may include, but are not limited to: various types of carbon, which may include acetylene black (AB), Ketjen black (KB), VGCF, carbon nanotubes, carbon nanohorns, and fullerenes.

The solid electrolyte used may be the same as those used in that used in the cathode mixture, but can also be different from that of cathode mixture. Examples of the electrolytes may include, but are not limited to: organic liquid, organic polymer, inorganic solids. Preferably, the electrolyte may be inorganic solids because of higher transference number of lithium compared to liquid and higher ionic conductivity than organic polymer. Further, inorganic solids are usually rigid and do not show liquidity which may be preferred to compose bipolar structure without ionic shorting.

Some examples of electrolyte may include, but are not limited to, materials having a composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-O-X' (X' is F, Cl, Br or combination of those), Li-B-H, Li-B-N-H, Li-B-H-O, Li-B-N-H-O, Li-M"-X" (M is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

The binder, the conductive agent, and the solid electrolyte may then be mixed. Different tools may be used for the mixing process. The tools used in the mixing process may be the same as those used in the cathode mixture but can also be different from that of cathode mixture. For example, the process/tools listed below may be used during the mixing process:

o High shear mixer
o Tumbler mixer
o Twin screw extruder

The above listing is given as examples and should not be seen in a limiting manner. For example, in the case of using PTFE as a binder, low temperature mixing can be considered. Especially mixing below 19°C might provide better uniformity of PTFE particles without too much fibrillation because the phase transition happens at 19°C. Above 19°C, the PTFE may generate fibrils with small amount of share force. Below 19°C, less fibrillation happens and can be dispersed by mixer less than higher temperature.

After the mixing process, a kneading process may be done. The kneading process may be done with different tools. The tools used in the kneading process may be the same as those used in the cathode mixture but can also be different from that of cathode mixture. For example, listed below are kneading process/tools that may be used. Again, the list is given as an example and should not be seen in a limiting manner. The kneading process/tools may include:

o Twin screw extruder

o Rubber kneader
o Mochi machine
o Automatic mortar

The kneading process is optional and may use may depend on the materials being used. For example, In the case of using PTFE as a binder, high temperature mixing can be considered. Especially mixing above 19°C might provide better uniformity of PTFE fibrils because the phase transition happens at 19°C. Above 19°C, the PTFE may generate fibrils with small amount of share force. As a result of kneading, one can obtain flakes of cathode mixture

A powdering step may also be used. In the case the kneading process is used, one can add the powdering process to turn the flakes into powders. The tools used in the powdering process may be the same as those used in the cathode mixture but can also be different from that of cathode mixture. Examples of different powdering process/tools are below:

o High speed grinder
o Twin screw extruder

Again, the list is given as an example and should not be seen in a limiting manner.

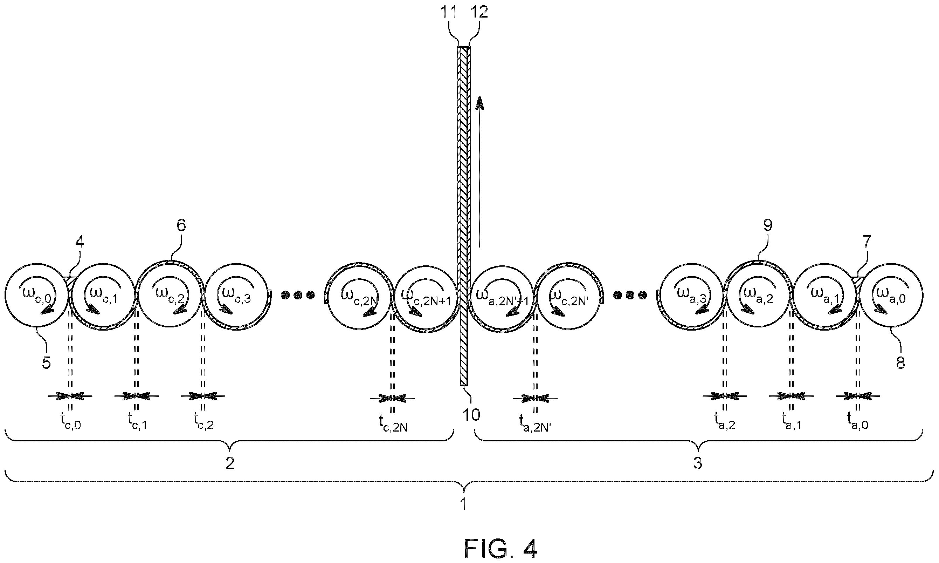

Referring to FIG. 4, a bipolar stack manufacturing process 1 consists of a cathode layer sheet manufacturing process 2, an anode layer sheet manufacturing process 3, and laminating a current collector 10, cathode layer 11 and anode layer 12.

As may be seen in FIG. 4, in the cathode layer sheet manufacturing process 2, the process may consist of a series of calender rolls 5. In accordance with an embodiment, there may always be an odd number of calender rolls 5. The calender rolls 5 can be numbered, with the number of the calender roll 5 at the end where the cathode mixture is fed being 0 and the number of the calender roll 5 at the end in contact with the current collector being $2N+1$, where N is a positive integer including 0.

Each calender roll 5 may have a radius which may be defined as $r_c$. The diameter of each calender roll 5 may be between 10mm to 1,000mm ($5mm < r_c < 500mm$). In accordance with an embodiment, each of the calender rolls 5 in the cathode layer sheet manufacturing process 2 may have the same radius $r_c$.

The calender rolls 5 may be made of different materials. In accordance with an embodiment, each calender roll 5 may be made of stainless steel, hardened steels (doped with Cr, W, Mo, or V) or similar types of materials. The surface of one or more of the calender rolls 5 may be coated by Diamond Like Carbon (DLC) or Chrome (Cr).

The angular velocity $w_{c,k}$ ($0 <= k <= 2N+1$) of each calender roll 5 may satisfies $w_{c,0} < w_{c,1} < ... < w_{c,2N+1}$. This may apply a shearing force to the binder to form fibrils and stretch the powder into a sheet. The gap between adjacent calender rolls 5 defined by m and m+1 may be expressed as $t_{c,m}$ ($0 <= m <= 2N$). The gap can be in the range of between 0.0001mm and 10mm. Cathode mixture (powder or flake) may be fed between calender rolls 5 numbered as 0 and 1.

The temperature of each calender roll 5 may be controlled. In accordance with one embodiment, temperature can be elevated and may range between 15°C and 250°C. As discussed above, in the case of using PTFE as a binder, a temperature above 19°C may be preferred as PTFE has phase transition temperature at 19°C. Above this temperature, PTFE shows much more fibrillation behavior.

In the anode layer sheet manufacturing process 2, the process may consist of a series of calender rolls 8. In the present embodiment, there are an odd number of calender rolls 8. The calender rolls 8 may be numbered, with the calender roll 8 at the end where the cathode mixture is fed being 0 and the calender roll 8 at the end in contact with the current collector being numbered $2N'+1$, where N is a positive integer including 0.

Each calender roll 8 may have a radius defined as $r_a$. Each calender roll 8 may have a diameter: 10mm to 1,000mm ($5mm < r_a < 500mm$). In accordance with one embodiment, all the calender rolls 8 in the cathode layer sheet manufacturing process 2 may have the same radius $r_a$.

The calender rolls 8 may be made of different materials. In accordance with one embodiment, the calender rolls 8 may be made of Stainless Steel, hardened Steels (doped with Cr, W, Mo, or V), or similar types of materials. The surface of one or more of the calender rolls 8 may be coated by Diamond Like Carbon (DLC) or Chrome (Cr).

The angular velocity $w_{c,k}$ ($0 <= k <= 2N'+1$) of each calender roll 8 may satisfies $w_{a,0} < w_{a,1} < ... < w_{a,2N'+1}$. This may apply shearing force to the binder to form fibrils and stretch the powder into a sheet. The gap between adjacent calender rolls 8 defined as calender rolls m and m+1 can be expressed as $t_{a,m}$ ($0 <= m <= 2N'$). The gap can be in the range of between 0.0001mm and 10mm. The anode mixture (powder or flake) may be fed between calender roll 8 labeled as 0 and calender roll 8 labeled as 1.

The temperature of each calender roll 8 may be controlled. In accordance with one embodiment, the temperature of the calender roll 8 may be elevated. The temperature range may be between 15°C and 250°C. Especially above 19°C is preferred as PTFE has phase transition temperature at 19°C. Above this temperature, PTFE shows much more fibrillation behavior.

During the lamination process the cathode layer sheet 6 and the anode layer sheet 9 may be laminated to the current collector 10. The current collector 10 may pass between the calender roll 5 number 2N+1 from the cathode layer manufacturing process 2 and the calender roll 8 number 2N'+1 from the anode layer manufacturing process 3. The current collector 10 may travel in a vertical direction from bottom to top.

During the lamination process, the speed of the calender rolls 5 and 8 should satisfy the below relation.

○

$$(0.8*k)*w_{c,2N+1} < w_{a,2N'+1} < (1.2*k)*w_{c,2N+1}$$

○

$$k = (r_c + t_{c,2N}) / (r_a + t_{a,2N'})$$

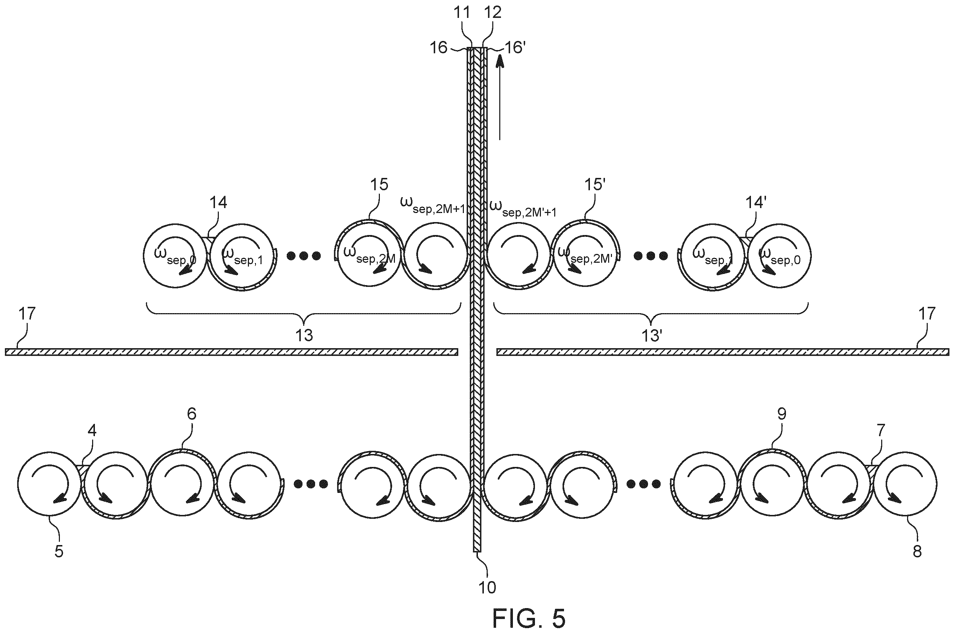

Referring to FIG. 5, a process for a separator fabrication and lamination process 13, 13' may be seen. It should be noted that it is important to avoid the cross contamination of CAM, AAM and conductive agent to the separator. Therefore, separator fabrication and lamination process 13, 13' should be on the top of the bipolar stacking process 1. Also a dividing wall 17 may be inserted between separator fabrication and lamination process 13. 13' and the bipolar stacking process 1.

The separator fabrication and lamination process 13, 13' shown in FIG. 5 may use a series of calender rolls 15, 15' on each side of the separator fabrication and lamination process 13, 13'. In the present embodiment, there are an odd number of calender rolls 15, 15' on each side. The calender rolls 15, 15' may be numbered, with the calender roll 15 number at the end where the cathode mixture is fed being 0 and the calender roll 15 number at the end in contact with the current collector being 2M+1, where M is a positive integer including 0. Similarly, the calender rolls 15' may be numbered, with the calender roll 15' number at the end where the anode mixture is fed being 0 and the calender roll 15' number at the end in contact with the current collector being 2M+1, where M is a positive integer including 0.

Each calender roll 15, 15' may have a radius defined as $r_{sep}$. The gap between adjacent calender rolls 15, 15' as may be defined as m and m+1 may be expressed as $t_{sep,\,m}$ (0<= m < =2N). The gap may range between 0.0001mm and 10mm.

The separator mixture (powder or flake) 14, 14' may be fed between the calender rolls 15, 15' numbered 0 and roll 1 on each side of the separator fabrication and lamination process 13, 13'. The angular velocity $w_{c,k}$ (0<= k <=2M+1) of each calender roll 15, 15' may satisfy $w_{sep,0} < w_{sep,1} <...< w_{sep,2N+1}$. This may apply a shearing force to the binder to form fibrils and stretch the powder into a sheet.

In FIG. 5, during the lamination process, the separator sheets 16, 16' formed may be laminated to the bipolar stacked layers, i.e., the cathode layer 11 and the anode layer 12, respectively. The calender rolls 15, 15' should satisfy the below relation

 o Separator sheet 16, 16' is laminated to the Bipolar stacked layers.

  ○

$$w_{sep,0} < w_{sep,1} < w_{sep,2} < w_{sep,3} < ... < w_{sep,2M+1}$$

  ○

$$w_{sep,0} < w_{sep,1} < w_{sep,2} < w_{sep,3} < ... < w_{sep,2M'+1}$$

  ○

$$(0.8* K_s)*w_{sep,2M+1} < w_{sep,2M'+1} < (1.2* K_s)*w_{sep,2M+1}$$

 o $K_s = (r_{sep} + t_{sep,2N}) / (r_{sep'} + t_{sep,2M'})$ : where $r_{sep}$ and $r_{sep'}$ are the radius of a calender roll on the cathode side and anode side, respectively.

The elements in the FIGs may be labeled as follows:

| 1 | Bipolar layer fabrication system |
|---|---|
| 2. | Cathode calendar rolls |
| 3. | Anode calendar rolls |
| 4. | Cathode mixture (powder or flake) |
| 5. | Cathode calendar roll |
| 6. | Cathode layer sheet |
| 7. | Anode mixture (powder or flake) |
| 8. | Anode calendaring roll |
| 9. | Anode layer sheet |
| 10. | Current collector |
| 11. | Cathode layer |
| 12. | Anode layer |
| 13,13' | Separator fabrication and lamination process |
| 14,14' | Separator mixture (powder or flake) |
| 15,15' | Separator calendar roll |
| 16,16' | Separator layer sheet (powder or flake) |
| 17 | Dividing wall |

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public.

## Claims

1. A method for forming a bipolar battery, comprising:
   applying a cathode layer to a current collector, comprising:

   providing a cathode mixture; and
   feeding the cathode mixture through a plurality of cathode calendar rolls;
   applying an anode layer to the current collector, comprising:

   providing an anode mixture; and
   feeding the anode mixture through a plurality of anode calendar rolls;
   wherein the cathode mixture and the anode mixture are fed into the plurality of cathode calendar rolls and the plurality of anode calendar rolls asymmetrically.

2. The method of Claim 1, wherein an angular velocity of each of the plurality of cathode calendar rolls and an angular velocity of each of the plurality of anode calendar rolls are proportional to a thickness of the cathode layer and a thickness of the anode layer being applied to the current collector.

3. The method of Claim 1 or 2, comprising a gap formed between a last cathode calendar roll and a last anode calendar roll where the current collector is fed for applying the cathode layer and the anode layer, wherein an angular velocity at the gap formed between a last cathode calendar roll and a last anode calendar roll is asymmetrical.

4. The method of any preceding Claim, wherein an angular velocity of each of the plurality of cathode calendar rolls and an angular velocity of each of the plurality of anode calendar rolls are proportional to a gap formed between a current cathode calendar roll and a directly adjacent cathode calendar roll of the plurality of cathode calendar rolls and a gap formed between a current anode calendar roll and a directly adjacent anode calendar roll of the plurality of anode calendar rolls.

5. The method of any preceding Claim, wherein a radius, $r_c$, of each of the plurality of cathode calendar rolls is equal and ranges between 5mm < $r_c$ < 500mm.

6. The method of any preceding Claim, wherein a radius, $r_a$, of each of the plurality of anode calendar rolls is equal and ranges between 5mm < $r_a$ < 500mm.

7. The method of any preceding Claim, comprising controlling a temperature of each cathode calender roll, wherein the temperature of each cathode calender roll ranges between 15°C and 250°C.

8. The method of any preceding Claim, comprising controlling a temperature of each anode calender roll, wherein the temperature of each anode calender roll ranges between 15 °C and 250°C.

9. The method of Claim 2, wherein the angular velocity of each of the plurality of cathode calendar rolls and the angular velocity of each of the plurality of anode calendar satisfies the equations:

   o

$$(0.8*k)*w_{c,2N+1} < w_{a,2N'+1} < (1.2*k)*w_{c,2N+1}$$

   o

$$k = (r_c + t_{c,2N}) / (r_a + t_{a,2N'})$$

   wherein $w_{c,N}$ is an angular velocity of a designated cathode calendar roll, N being a positive integer greater than or equal to 0, $w_{a,N'}$ is an angular velocity of a designated anode calendar roll, N' being a positive integer greater than or equal to 0, $r_c$ is a radius of an individual cathode calendar roll, $r_a$ is a radius of an individual anode calendar roll, $t_{c,2N}$ is a gap between adjacent cathode calendar rolls, and $t_{a,2N'}$ is a gap between adjacent anode calendar rolls.

10. The method of any preceding Claim, comprising:
    applying a first separator layer to the cathode layer and a second separator layer to the anode layer comprising:

    providing a cathode separator mixture;
    providing an anode separator mixture;
    feeding the cathode separator mixture through a first plurality of separator calendar rolls; and
    feeding the anode separator mixture through a second plurality of separator calendar rolls;
    wherein an angular velocity of each of the first plurality of separator calendar rolls and an angular velocity of each of the second plurality of separator calendar rolls is proportional to a thickness of the cathode separator layer and a thickness of the anode separator layer being applied to the current collector.

11. The method of Claim 10, wherein the angular velocity of each of the first plurality of separator rolls and the angular velocity of each of the second plurality of separator calendar rolls satisfies the equations:

    o

$$(0.8* K_s)*w_{sep,2M+1} < w_{sep,2M'+1} < (1.2* K_s)*w_{sep,2M+1}$$

    o $K_s = (r_{sep} + t_{sep,2N}) / (r_{sep'} + t_{sep,2M'})$ : where $r_{sep}$ is a radius of a separator calender roll of the first plurality of separator rolls and $r_{sep'}$ is a radius of a separator calender roll of the second plurality of separator rolls, respectively;

    wherein $w_{sep,N}$ is an angular velocity of a designated separator calendar roll of the first plurality of separator rolls, N being a positive integer greater than or equal to 0, $w_{sep,N'}$ is an angular velocity of a designated separator calendar roll of the second plurality of calendar rolls, N' being a positive integer greater than or equal to 0, $r_{sep}$ is a radius of an individual separator calendar roll of one of the first plurality of separator rolls or the second plurality of separator rolls, $t_{sep,2N}$ is a gap between adjacent separator calendar rolls of the first plurality of separator rolls, and $t_{sep,2N'}$ is a gap between adjacent separator calendar rolls of the second plurality of calendar rolls.

Cathode Active Material | Binder | Conductive agent | Solid electrolyte

Mixing

(Kneading)

(Powdering)

Cathode mixture

FIG. 1

Anode Active Material | Binder | Conductive agent | Solid electrolyte

Mixing

(Kneading)

(Powdering)

Anode mixture

FIG. 2

FIG. 3

FIG. 4

EP 4 564 444 A1

FIG. 5

| | Europäisches Patentamt European Patent Office Office européen des brevets | **EUROPEAN SEARCH REPORT** | **Application Number** EP 24 21 1722 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 071 025 A (FRAUNHOFER GES ZUR FU RDERUNG DER ANGEWANDTEN FORSCHUNG E V ET AL.) 20 September 2022 (2022-09-20) * paragraphs [0009] - [0049]; figures 1-3 * | 1-11 | INV. H01M4/04 H01M4/02 H01M10/04 |
| A | US 2020/227722 A1 (BOGENSTAHL FRANK [DE] ET AL) 16 July 2020 (2020-07-16) * paragraphs [0026] - [0039]; figures 4-6 * | 1-11 | |
| A | US 2014/342225 A1 (ISSHIKI YASUHIRO [JP] ET AL) 20 November 2014 (2014-11-20) * paragraphs [0139] - [0230]; figures 6-15 * | 1-11 | |

TECHNICAL FIELDS
SEARCHED          (IPC)

H01M

The present search report has been drawn up for all claims

| Place of search | Date of completion of the search | Examiner |
|---|---|---|
| Munich | 10 April 2025 | Tsipouridis, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 1722

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | Publication date | Patent family member(s) | Publication date |
|---|---|---|---|
| CN 115071025 A | 20-09-2022 | CN 110869179 A | 06-03-2020 |
| | | CN 115071025 A | 20-09-2022 |
| | | DE 102017208220 A1 | 22-11-2018 |
| | | EP 3625018 A1 | 25-03-2020 |
| | | EP 4119323 A1 | 18-01-2023 |
| | | ES 2963957 T3 | 03-04-2024 |
| | | HU E064505 T2 | 28-03-2024 |
| | | JP 7248835 B2 | 29-03-2023 |
| | | JP 7609910 B2 | 07-01-2025 |
| | | JP 2020522090 A | 27-07-2020 |
| | | JP 2022062188 A | 19-04-2022 |
| | | JP 2023103999 A | 27-07-2023 |
| | | JP 2025038179 A | 18-03-2025 |
| | | KR 20200020702 A | 26-02-2020 |
| | | KR 20220098052 A | 08-07-2022 |
| | | PL 3625018 T3 | 26-02-2024 |
| | | RS 64947 B1 | 31-01-2024 |
| | | US 2021320288 A1 | 14-10-2021 |
| | | US 2024274784 A1 | 15-08-2024 |
| | | WO 2018210723 A1 | 22-11-2018 |
| US 2020227722 A1 | 16-07-2020 | CN 114207864 A | 18-03-2022 |
| | | EP 3912206 A2 | 24-11-2021 |
| | | EP 3912207 A1 | 24-11-2021 |
| | | JP 7621273 B2 | 24-01-2025 |
| | | JP 2022519134 A | 18-03-2022 |
| | | TW 202038496 A | 16-10-2020 |
| | | TW 202236720 A | 16-09-2022 |
| | | TW 202437574 A | 16-09-2024 |
| | | US 2020227722 A1 | 16-07-2020 |
| | | US 2022072612 A1 | 10-03-2022 |
| | | US 2024322115 A1 | 26-09-2024 |
| | | US 2024339586 A1 | 10-10-2024 |
| | | US 2025029976 A1 | 23-01-2025 |
| | | WO 2020148410 A2 | 23-07-2020 |
| | | WO 2020150254 A1 | 23-07-2020 |
| US 2014342225 A1 | 20-11-2014 | CN 103907226 A | 02-07-2014 |
| | | EP 2757620 A1 | 23-07-2014 |
| | | KR 20140063789 A | 27-05-2014 |
| | | US 2014342225 A1 | 20-11-2014 |
| | | WO 2013039131 A1 | 21-03-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63601156